# EUROPÄISCHE PATENTSCHRIFT

(11) **EP 3 558 065 B1**
(45) Veröffentlichungstag und Bekanntmachung des Hinweises auf die Patenterteilung: **20.04.2022**
(21) Anmeldenummer: 17828718.1
(22) Anmeldetag: 19.12.2017
(51) Int. Cl.: A47F 3/00, F21V 21/35, G09F 3/20

(54) **SYSTEM UND VERFAHREN ZUR BESTROMUNG MEHRERER ELEKTRONISCHER ANZEIGEEINRICHTUNGEN ZUR ANZEIGE VON PRODUKTBEZOGENEN INFORMATIONEN**
SYSTEM AND METHOD FOR POWERING MULTIPLE ELECTRONIC DISPLAY DEVICES FOR DISPLAYING GOODS-RELATED INFORMATION
SYSTÈME ET METHOD D'ALIMENTATION EN COURANT ÉLECTRIQUE DE PLUSIEURS DISPOSITIFS D'AFFICHAGE ÉLECTRONIQUES SERVANT À L'AFFICHAGE D'INFORMATIONS RELATIVES À DES PRODUITS

(30) Priorität: 20.12.2016 DE 102016124956
(43) Veröffentlichungstag der Anmeldung: 30.10.2019
(73) Patentinhaber: REHAU Industries SE & Co. KG, 95111 Rehau (DE)
(72) Erfinder: BÜHLMEYER, Christian, 1120 Wien (AT); GOLDSTEIN, Jörg, 95028 Hof (DE); EIBL, Stefan, 95028 Hof (DE); NIEHOFF, Ansgar, 95111 Rehau (DE); MICHELS, Peter, 95028 Hof (DE); FRITZLAR, Holger, 50968 Köln (DE); SCHMIDT, Steven, 95182 Döhlau (DE)
(86) Internationale Anmeldenummer: PCT/EP2017/083550
(87) Internationale Veröffentlichungsnummer: WO 2018/114954

(56) Entgegenhaltungen:
- EP-A2- 0 558 305
- US-A- 3 295 093
- US-A- 3 529 275
- US-A1- 2014 055 987
- US-B1- 6 231 205
- US-B1- 8 915 609
- US-B2- 8 910 864

## Beschreibung

Die vorliegende Erfindung betrifft ein System zur Bestromung mehrerer elektronischer Anzeigeeinrichtungen zur Anzeige von warenbezogenen Informationen. Ferner betrifft die Erfindung ein Warenpräsentationssystem mit einem derartigen System zur Bestromung mehrerer Anzeigeeinrichtungen zur Anzeige von warenbezogenen Informationen.

Im Einzelhandel, insbesondere in Supermärkten und Drogeriemärkten, kommen in zunehmenden Maße Anzeigeeinrichtungen zur Anzeige von produktbezogenen Informationen zum Einsatz, wobei diese insbesondere dafür vorgesehen sind den Preis einer Ware anzuzeigen. Bekannte typische Anzeigeeinrichtungen zur Anzeige von warenbezogenen Informationen sind meist in Form sogenannter ESLs (Electronic Shelf Labels) ausgebildet, die auch als elektronisches Preisschild bezeichnet werden ESIs und eine Aufnahme für diese sind z.B. aus der DE 20 2015 105 014 U1 bekannt.

Aus der US 8,915,609 B1 ist ein LED-Lichtmodul bekannt. Aus der US 6,231,205 B1 ist eine Lichtfixierung für ein Regal bekannt. Aus der US 3,295,093 A ist eine Schiene zur Verteilung von elektrischer Leistung bekannt. Aus der US 2014/055987 A1 ist eine beleuchtbare Regaleinheit bekannt. Aus der EP 0 558 305 A2 ist unter anderem eine Vorrichtung zur Zufuhr von Leistung und/oder Daten an elektronische Anzeigeeinrichtungen bekannt, die an Regalen eines Regalsystems angebracht sind. Aus der US 8,910,864 B2 ist ein elektronisches Produktinformations- und Displaysystem bekannt. Aus US3529275A ist ein System zur Bestromung von Leuchtmitteln bekannt.

Typischerweise sind die Anzeigeeinrichtungen in naher Umgebung der jeweiligen Ware angeordnet, so dass der potentielle Käufer die von der Anzeigeeinrichtung angezeigten warenbezogenen bzw. produktbezogenen Informationen direkt mit dem jeweiligen Produkt bzw. der jeweiligen Ware in Verbindung bringen kann. Insbesondere in einem Supermarkt oder Drogeriemarkt mit vielen unterschiedlichen Waren kommt daher in der Regel eine große Vielzahl von Anzeigeeinrichtungen zur Anzeige von warenbezogenen Informationen zum Einsatz. Bei der Installation bzw. Montage der Anzeigeeinrichtungen ist es insbesondere erforderlich eine Stromversorgung bzw. Spannungsversorgung für alle Anzeigeeinrichtungen zu realisieren, womit ein hoher Verkabelungsaufwand verbunden ist.

Der vorliegenden Erfindung liegt daher die Aufgabe zugrunde, den Verkabelungsaufwand für die Bereitstellung der Stromversorgung von mehreren Anzeigeeinrichtungen zur Anzeige von produktbezogenen Informationen zu reduzieren.

Diese Aufgabe wird erfindungsgemäß mit einem System, dass zur Bestromung mehrerer Anzeigeeinrichtungen zur Anzeige von warenbezogenen Informationen vorgesehen ist mit den Merkmalen des Anspruchs 2 gelöst.

Bevorzugte Ausführungsformen des Systems zur Bestromung mehrerer Anzeigeeinrichtungen zur Anzeige von warenbezogenen Informationen sind in den abhängigen Ansprüchen beschrieben.

Das erfindungsgemäße System zur Bestromung mehrerer Anzeigeeinrichtungen zur Anzeige von warenbezogenen Informationen weist einen länglichen Grundkörper aus einem Kunststoffmaterial und wenigstens eine Abschlusseinrichtung auf. Der Grundkörper, der vorzugsweise ein extrudierter Grundköper bzw. ein durch Extrusion hergestellter Grundkörper ist, weist einen sich über die gesamte Länge des Grundkörpers erstreckenden Kanal zur Aufnahme der Anzeigeeinrichtungen auf bzw. der Grundköper weist eine sich über die gesamte Länge des Grundkörpers erstreckende längliche Aufnahme zur Aufnahme der Anzeigeeinrichtungen auf.

Der Kanal bzw. die Aufnahme erstreckt sich über die gesamte Länge des Grundkörpers bzw. der Kanal oder die Aufnahme erstreckt sich von einem von zwei entgegengesetzten Enden des Grundkörpers bis zu dem anderen der beiden entgegengesetzten Enden des Grundkörpers.

Der Grundkörper weist zwei entgegengesetzte Endabschnitte auf bzw. der Grundkörper weist zwei längsläufig zueinander entgegengesetzte Endabschnitte auf, wobei jeder der Endabschnitte des Grundkörpers einen bzw. jeweils einen von zwei entgegengesetzten Kanal-Endabschnitten des Kanals aufweist bzw. einen bzw. jeweils einen von zwei längsläufig zueinander entgegengesetzten Kanal-Endabschnitten des Kanals aufweist (bzw. einen von zwei entgegengesetzten Aufnahme-Endabschnitten der Aufnahme aufweist bzw. einen von zwei längsläufig zueinander entgegengesetzten Aufnahme-Endabschnitten der Aufnahme aufweist) bzw. wobei sich an jeweils einem von zwei entgegengesetzten - bzw. längsläufig zueinander entgegengesetzten - Endabschnitten des Grundkörpers jeweils ein Kanal-Endabschnitt bzw. ein Aufnahme-Endabschnitt befindet.

Die Anzeigeeinrichtungen sind in dem Kanal aufnehmbar, wobei die Anzeigeeinrichtungen in dem Kanal zur Realisierung einer Reihe von aufeinanderfolgend angeordneten Anzeigeeinrichtungen vorzugsweise entlang der Längsachse des Grundkörpers aufeinanderfolgend in dem Kanal aufnehmbar sind bzw. unter Ausbildung einer sich entlang der Längsachse des Grundkörpers erstreckenden Reihe in dem Kanal aufnehmbar bzw. aufeinanderfolgend aufnehmbar sind. Diese reihenförmige Anordnung ermöglicht vorteilhaft eine Anordnung des Systems in Umgebung eines Warenregals, bei welcher jeweils eine Anzeigeeinrichtung vom potentiellen Käufer oder Kaufinteressenten unmittelbar der zugehörigen Ware zugeordnet werden kann, und zwar der Waren von mehreren Waren, die ebenfalls reihenförmig aufeinanderfolgend auf einer Ablagevorrichtung bzw. einem Regalbodens eines Warenregals abgestellt bzw. angeordnet sind.

Der Kanal des Grundkörpers, der zur Aufnahme der Anzeigeeinrichtungen vorgesehen bzw. eingerichtet ist, erstreckt sich über die gesamte Länge des Grundkörpers. Der Kanal ist besonders bevorzugt ein zur Längsachse des Grundkörpers parallel ausgerichteter Kanal bzw. der Kanal ist besonders bevorzugt ein zur Längsachse des Grundkörpers parallel ausgerichteter länglicher Kanal. Sofern es sich vorzugsweise um einen extrudierten Grundkörper handelt, ist der Kanal ein beim extrudieren des Grundkörpers gebildeter Kanal. Infolge der Erstreckung über die gesamte Länge des Grundkörpers ist der Kanal bzw. die Aufnahme zu beiden Stirnseiten des Grundkörpers hin offen bzw. zugänglich. Besonders bevorzugt ist der Kanal auch zu einer Längsseite des Grundkörpers offen bzw. zugänglich, so dass die Anzeigeeinrichtungen von der Längsseite her in dem Kanal aufgenommen werden können. Dies hat den Vorteil, dass die Anzeigeeinrichtungen zur Realisierung einer Reihe von aufeinanderfolgend an dem Grundkörper angeordneten Anzeigeeinrichtungen nicht stirnseitig nacheinander in den Kanal eingeschoben werden müssen, was sich je nach Ausführung des Kanals infolge von Verkantungen schwierig gestalten kann.

Die bzw. jede der Anzeigeeinrichtungen ist in dem Kanal aufnehmbar, wobei die bzw. jede Anzeigeeinrichtung in dem Kanal insbesondere kraftschlüssig aufnehmbar sein kann. Besonders praktisch kann die bzw. jede Anzeigeeinrichtung durch Aufnehmen in dem Kanal mit dem extrudierten Grundkörper eine lösbare Schnappverbindung ausbilden.

Das erfindungsgemäße System weist wenigstens zwei Stromleiter auf, wobei jeder der Stromleiter zwei Stromleiter-Endabschnitte und einen Zwischenabschnitt aufweist. Der Zwischenabschnitt jedes Stromleiters ist in dem Kanal angeordnet ist und von jedem Stromleiter ist jeweils einer der Stromleiter-Endabschnitte in jeweils einem der beiden entgegengesetzten Kanal-Endabschnitte mit wenigstens einem Teilabschnitt angeordnet.

Bei den voneinander beabstandeten Stromleitern kann es sich um Stromleiter mit einer dem Fachmann geläufigen Ausbildung aufweisen. So können die Stromleiter z.B. insbesondere in Form von Leiterbahnen ausgebildet sein, wobei die Leiterbahnen z.B. Leiterbahnen aus Kupfer, aus verzinntem Kupfer, aus verkupfertem Aluminium oder aus verzinktem Aluminium oder aus verkupfertem Gold oder aus Silber oder aus Graphit oder aus leitfähigen Polymeren (wie z.B. PEDOT-PSS, PANI, etc.) oder aus verschiedenen Kohlenstoffmodifikationen (wie z.B. CNTs, Fullerene etc.) sein können. Die Leiterbahn können zum Halten derselben in dem Kanal z.B. auf das Kunststoffmaterial des Grundkörpers aufextrudiert oder aufkaschiert oder aufgedruckt sein oder jede der Leiterbahnen kann zum Halten derselben in dem Kanal in Form eines länglichen Teilstücks eines länglichen leitenden Körpers ausgebildet sein, wobei ein weiteres Teilstück des länglichen leitenden Körpers in das Kunststoffmaterial des extrudierten Grundkörpers z.B. einextrudiert, eingedrückt, eingeklebt oder eingeclipst sein kann.

Das erfindungsgemäße System ist so ausgebildet, dass durch Aufnehmen der Anzeigeeinrichtungen in dem Kanal jeweils ein Stromversorgungskontakt jeder Anzeigeeinrichtung bzw. ein Stromversorgungsanschluss jeder Anzeigeeinrichtung mit jeweils einem der Stromleiter elektrisch leitend kontaktierbar ist. Oder in anderen Worten: Durch Aufnehmen der Anzeigeeinrichtungen in dem Kanal ist von jeder Anzeigeeinrichtung jeweils ein Stromversorgungskontakt mit jeweils einem der Stromleiter elektrisch leitend kontaktierbar.

So kann vorteilhaft auf einfache und praktische Weise für jede in dem Kanal aufzunehmende Anzeigeeinrichtung zur Anzeige von warenbezogenen Informationen eine für die Stromversorgung der Anzeigeeinrichtungen erforderliche Kontaktierung der in dem Kanal angeordneten Stromleiter mit den Stromversorgungskontakten bzw. Spannungsversorgungskontakten der Anzeigeeinrichtungen bzw. den Stromversorgungsanschlüssen bzw. den Spannungsversorgungsanschlüssen der Anzeigeeinrichtungen realisiert werden.

Ferner ist das erfindungsgemäße System so ausgebildet, dass die Abschlusseinrichtung (bzw. die wenigstens eine Abschlusseinrichtung) wenigstens zwei elektrische Versorgungsleitungen aufweist, die zum Herstellen einer Verbindung mit einer Stromquelle vorgesehen sind bzw. die zum Anschließen an eine Stromquelle vorgesehen sind, wobei die Abschlusseinrichtung mit wenigstens einem der beiden entgegengesetzten Endabschnitte des Grundkörpers verbindbar ist, und wobei durch Verbinden der Abschlusseinrichtung mit dem Endabschnitt des Grundkörper jeweils ein Endabschnitt (bzw. Versorgungsleitungsendabschnitt) jeder der Versorgungsleitungen mit jeweils einem Stromleiter-Endabschnitt der Stromleiter-Endabschnitte elektrisch leitend kontaktierbar ist, die in dem Kanal-Endabschnitt des Endabschnitts mit wenigstens einem Teilabschnitt angeordnet sind.

Die erfindungsgemäß vorgesehene Kontaktierbarkeit der Stromversorgungskontakte jeder der Anzeigeeinrichtungen mit den in dem Kanal angeordneten Stromeiter durch Aufnehmen der Anzeigeeinrichtungen in dem Kanal zusammen mit der durch einfaches Verbinden der Abschlusseinrichtung mit dem Endabschnitt realisierbaren elektrischen Kontaktierung der Versorgungsleitungs-Endabschnitte der Abschlusseinrichtung mit den Stromleiter-Endabschnitten der Stromleiter ermöglicht vorteilhaft eine auf sehr einfache und praktische Weise realisierbare Bereitstellung der Stromversorgung bzw. Spannungsversorgung der Anzeigeeinrichtungen über die elektrischen Versorgungsleitungen der Abschlusseinrichtung, die zum Herstellen einer Verbindung mit einer Stromquelle bzw. einer externen Stromquelle vorgesehen sind bzw. die zum Herstellen einer elektrisch leitenden Verbindung mit einer Stromquelle bzw. einer externen Stromquelle bzw. einer Spannungsquelle bzw. einer externen Spannungsquelle vorgesehen sind. Die Stromversorgung aller Anzeigeeinrichtungen kann also einfach dadurch realisiert werden, dass die Anzeigeeinrichtungen in dem Kanal aufgenommen werden, die Abschlusseinrichtung mit dem Endabschnitt des Grundkörpers verbunden wird, hiernach die Versorgungsleitungen der Abschlusseinrichtung an eine Stromquelle angeschlossen werden bzw. elektrische leitende Verbindungen der Versorgungsleitungen zu einer Stromquelle hergestellt werden und die Anzeigeeinrichtungen von der Stromquelle über die Versorgungsleitungen bestromt werden bzw. mit einer Versorgungsspannung versorgt werden, wobei dies z.B. bei einer Gleichstromquelle dadurch erfolgen kann, dass eine der Versorgungsleitungen an den Pluspol der Stromquelle angeschlossen wird und die andere der beiden Versorgungsleitungen an den Minuspol der Stromquelle angeschlossen wird. Insgesamt betrachtet kann infolge der mittels des erfindungsgemäßen Systems sehr einfach realisierbaren Stromversorgung der Anzeigeeinrichtungen der Verkabelungsaufwand für die Bereitstellung der Stromversorgung reduziert bzw. deutlich reduziert werden. Nach der Aufnahme der Anzeigeeinrichtungen in dem Kanal sind lediglich die Versorgungsleitungen an die jeweilige Stromquelle bzw. Spannungsquelle anzuschließen. Ein aufwendiges Verkabeln jeder einzelnen Anzeigeeinrichtung, wie es bei bekannten Lösungen der Fall ist, kann vorteilhaft entfallen. So können der Installationsaufwand und mithin insbesondere auch Installationskosten deutlich reduziert werden.

Bei den Anzeigeneinrichtungen zur Anzeige von warenbezogenen Informationen bzw. produktbezogenen Informationen kann es sich um geläufige bzw. bekannte Anzeigeeinrichtungen handeln, die für Anzeige von warenbezogenen Informationen bzw. produktbezogenen Informationen vorgesehen sind bzw. eingerichtet sind. Insbesondere kann es sich um Anzeigeeinrichtungen handeln, die in Form sogenannter ESLs (Electronic Shelf Labels) ausgebildet sind, die die auch als elektronisches Preisschild bezeichnet werden. Größenordnungsmäßig können diese Anzeigeeinrichtungen eine Länge innerhalb eines Bereichs von 2 bis 125 cm, eine Höhe innerhalb eines Bereichs von 2 bis 50 cm und eine Dicke innerhalb eines Bereichs von 0,2 bis 2 cm aufweisen.

Bei den warenbezogenen Informationen kann es sich um beliebige Informationen über die jeweilige Ware handeln, also z.B. um den Preis der Ware, die Bezeichnung der Ware, das Haltbarkeitsdatum, das Gewicht usw.

Bei dem erfindungsgemäßen System weist jeder der Stromleiter zwei Stromleiter-Endabschnitte auf, von denen jeweils einer in einem der beiden entgegengesetzten Kanal-Endabschnitte mit wenigstens einem Teilabschnitt angeordnet ist. Das heißt also, dass bei einem der Stromleiter ein erster der beiden Stromleiter-Endabschnitte in einem ersten der beiden entgegengesetzten Kanal-Endabschnitte mit wenigstens einem Teilabschnitt angeordnet ist und der zweite Stromleiter-Endabschnitt dieses Stromleiters in dem zweiten der beiden entgegengesetzten Kanal-Endabschnitte mit wenigstens einem Teilabschnitt angeordnet ist. Ein Zwischenabschnitt Abschnitt des jeweiligen Stromleiters, der sich von dem ersten Stromleiter-Endabschnitt bis zu dem zweiten Stromleiter-Endabschnitt erstreckt bzw. der den ersten Stromleiter-Endabschnitt mit dem zweiten Stromleiter-Endabschnitt verbindet, ist dann in einem mittleren Bereich des Kanals angeordnet, der von dem ersten Kanal-Endabschnitt bis zu dem zweiten Kanal-Endabschnitt reicht. Es versteht sich, dass jeder der Stromleiter besonders bevorzugt geradlinig ausgebildet ist und sich besonders bevorzugt parallel bzw. im Wesentlichen parallel zur Längsachse des extrudierten Grundkörpers erstreckt. Insbesondere kann sich jeder Stromleiter über die gesamte Länge des Kanals erstrecken. Allerdings ist dies selbstverständlich nicht zwingend. Erfindungsgemäß ist lediglich zu bewerkstelligen, dass durch Aufnehmen der Anzeigeeinrichtungen in dem Kanal jeweils ein Stromversorgungskontakt jeder Anzeigeeinrichtung mit jeweils einem der Stromleiter elektrisch leitend kontaktierbar ist. Diese Kontaktierbarkeit kann in einer dem Fachmann geläufigen Weise insbesondere durch geeignete Anpassung der Abmessungen des Kanals an die relevanten Abmessungen der Anzeigeeinrichtungen erfolgen.

Die Abschlusseinrichtung weist wenigstens zwei elektrische Versorgungsleitungen auf, die zum Herstellen einer Verbindung mit einer Stromquelle bzw. zum Anschließen an eine Stromquelle vorgesehen sind. Es versteht sich, dass es sich bei den Versorgungsleitungen wenigstens abschnittsweise insbesondere um stromführende Leiter bzw. Innenleiter bzw. Seelen eines Versorgungskabels handeln kann, die besonders bevorzugt stromführenden Leiter bzw. Innenleiter eines einzigen Versorgungskabels sind.

Es versteht sich, dass jeder der Stromleiter-Endabschnitte z.B. auch in Form eines strom leitenden Kontakts eines Steckers oder Gegensteckers ausgebildet sein kann. Es versteht sich auch, dass jeder der Versorgungsleitungs-Endabschnitte auch in Form eines strom leitenden Kontakts eines entsprechenden Gegensteckers bzw. Steckers ausgebildet sein kann, so dass durch Verbinden der Abschlusseinrichtung mit dem Endabschnitt des Grundkörpers auch Steckerverbindungen ausbildbar sein können, um die elektrisch leitende Kontaktierung bzw. die elektrische leitende Verbindung zwischen den Versorgungsleitungs-Endabschnitten und den Stromleiter-Endabschnitten zu realisieren.

Die Abschlusseinrichtung ist mit wenigstens einem der beiden entgegengesetzten Endabschnitte des Grundkörpers verbindbar, wobei die Abschlusseinrichtung mit dem Endabschnitt des Grundkörpers besonders bevorzugt kraftschlüssig verbindbar ist. Die Abschlusseinrichtung weist einen Einsteckkörper auf, der zum Ausbilden einer kraftschlüssigen Verbindung mit dem extrudierten Grundkörper stirnseitig in den Kanal des extrudierten Grundkörpers einsteckbar ist.

Die Abschlusseinrichtung ist mit wenigstens einem der beiden entgegengesetzten Endabschnitte des Grundkörpers lösbar verbindbar bzw. manuell lösbar verbindbar, so dass die Abschlusseinrichtung insbesondere für Wartungszwecke oder Reparaturzwecke von dem extrudierten Grundkörper vorteilhaft gelöst und auch ggf. mit diesem wieder verbunden werden kann.

Durch Verbinden der Abschlusseinrichtung mit dem Endabschnitt des Grundkörpers ist jeweils ein Versorgungsleitungs-Endabschnitt jedes der Versorgungsleitungen mit jeweils einem Stromleiter-Endabschnitt der Stromleiter-Endabschnitte elektrisch leitend kontaktier- bar, die in dem Kanal-Endabschnitt des Endabschnitts mit wenigstens einem Teilabschnitt angeordnet sind. Diese Kontaktierbarkeit kann in einer dem Fachmann geläufigen Weise insbesondere durch geeignete Anordnung der Versorgungsleitungs-Endabschnitte erfolgen. So kann z.B. jeder der Versorgungsleitungs-Endabschnitte bei bestehender Verbindung zwischen Grundkörper und Abschlusseinrichtung insbesondere in den Kanal des Grundkörpers hineinragen, um die Kontaktierung zu den Stromleiter-Endabschnitten, die jeweils mit wenigstens einem Teilabschnitt in dem Kanal angeordnet sind, zu realisieren.

Jeder Stromleiter weist zwei Stromleiter-Endabschnitte auf, von denen jeweils einer in einem der beiden entgegengesetzten Kanal-Endabschnitte mit wenigstens einem Teilabschnitt angeordnet ist. Der jeweilige Stromleiter-Endabschnitt ist also mit wenigstens einem Teilabschnitt in einem der beiden entgegengesetzten Kanal-Endabschnitte angeordnet, so dass also der jeweilige Stromleiter-Endabschnitt insbesondere auch vollständig bzw. zur Gänze in dem jeweiligen Kanal-Endabschnitt angeordnet sein kann bzw. in dem Kanal angeordnet sein kann, und zwar ohne aus dem Kanal-Endabschnitt herauszuragen. Erfindungsgemäß kann jedoch auch vorgesehen sein, dass nur ein Teilabschnitt des jeweiligen Stromleiter-Endabschnitts in dem Kanal-Endabschnitt angeordnet ist, so dass ein weiterer Teilabschnitt des jeweiligen Stromleiter-Endabschnitts also insbesondere auch außerhalb des jeweiligen Kanal-Endabschnitts angeordnet sein kann bzw. aus dem jeweiligen Kanal- Endabschnitt herausragen kann.

Bei dem Kunststoffmaterial, aus dem der längliche Grundkörper besteht, kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Bei dem System weist die Abschlusseinrichtung einen Flachkörper bzw. ein Flachelement aus einem Kunststoffmaterial mit zwei entgegengesetzten Seiten und wenigstens einen mit einem der beiden Seiten verbundenen Einsteckkörper aus einem Kunststoffmaterial auf, wobei der Einsteckköper zum Verbinden der Abschlusseinrichtung mit dem Endabschnitt des Grundkörpers durch stirnseitiges Einstecken in den Kanal in dem Kanal kraftschlüssig aufnehmbar ist. Mittels dieser Abschlusseinrichtung kann auf sehr einfache und praktische Weise eine Verbindung der Versorgungsleiter-Endabschnitte mit den Stromleiter-Endabschnitten durch einen einfachen Einsteckvorgang realisiert werden. Das Vorsehen des Flachkörpers ermöglicht vorteilhaft eine gewichtseinsparende und optisch ansprechende Ausbildung des Flachkörpers. Der Einsteckköper ist zum Verbinden der Abschlusseinrichtung mit dem Endabschnitt des Grundkörpers durch stirnseitiges Einstecken in den Kanal in dem Kanal kraftschlüssig aufnehmbar bzw. zur Gänze oder wenigstens teilweise aufnehmbar bzw. der Einsteckköper ist zum Verbinden der Abschlusseinrichtung mit dem Endabschnitt des Grundkörpers durch stirnseitiges Einstecken in den Kanal in dem Kanal besonders bevorzugt klemmend haltbar bzw. unter Ausbildung einer Klemmspannung in dem Kanal haltbar. Es versteht sich, dass die mittels dieser bevorzugten Ausführungsform realisierbare Verbindung zwischen der Abschlusseinrichtung und dem Grundkörper besonders bevorzugt eine lösbare bzw. manuell lösbare Verbindung sein kann. Der Einsteckkörper kann also besonders bevorzugt aus dem Kanal herausziehbar sein bzw. manuell aus dem Kanal herausziehbar sein. Durch die vor- zugsweise vorgesehene Lösbarkeit der Verbindung zwischen der Abschlusseinrichtung und dem Grundkörper können vorteilhaft insbesondere Wartungsarbeiten bzw. Reparaturen auf einfache und praktische Weise vorgenommen werden.

Bei dem Kunststoffmaterial aus dem der Flachkörper und der Einsteckkörper bestehen kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Die mit den Stromleiter-Endabschnitten kontaktierbaren Versorgungsleitungs-Endabschnitte sind an dem Einsteckkörper vorgesehen. Da der Einsteckkörper in dem Kanal durch Einstecken kraftschlüssig aufnehmbar ist, können durch das Vorsehen der Versorgungsleitungs-Endabschnitte an dem Einsteckkörper vorteilhaft auch stabile elektrisch leitende Kontaktierungen der Versorgungsleitungs-Endabschnitte mit den Stromleiter-Endabschnitten realisiert werden.

Die Stirnseite des Grundkörpers ist durch stirnseitiges Einstecken des Einsteckkörpers in den Kanal von dem Flachelement bedeckbar. Durch die hiermit bereitgestellte Bedeckungsmöglichkeit kann ein optisch sehr ansprechender Abschluss geschaffen werden. Erfindungsgemäß weist das Flachelement eine Ausbildung auf, die vorteilhaft durch stirnseitiges Einstecken des Einsteckkörpers in den Kanal bündig an den Grundkörper anschließbar ist, einhergehend mit der Schaffung eines optisch sehr ansprechenden Abschlusses.

Bei einer praktischen Ausführungsform des erfindungsgemäßen Systems weist das System wenigstens eine Datenleitung auf, wobei die Datenleitung einen Zwischenabschnitt und zwei Datenleitungs-Endabschnitte aufweist, wobei der Zwischenabschnitt der Datenleitung in dem Kanal angeordnet ist und jeweils einer der Datenleitungs-Endabschnitte in jeweils einem der beiden entgegengesetzten Kanal-Endabschnitte mit wenigstens einem Teilabschnitt angeordnet ist, wobei durch Aufnehmen der Anzeigeeinrichtungen in dem Kanal jeweils ein Datenleitungsanschluss jeder Anzeigeeinrichtung mit der Datenleitung datenübertragbar verbindbar ist, wobei die Abschlusseinrichtung wenigstens eine Datenversorgungsleitung aufweist, die zum Herstellen einer datenübertragenden Verbindung mit einer Datenquelle vorgesehen ist, wobei durch Verbinden der Abschlusseinrichtung mit dem Endabschnitt des Grundkörpers ein Endabschnitt der Datenversorgungsleitung mit dem Datenleitungs-Endabschnitt datenübertragbar verbindbar ist, der in dem Kanal-Endabschnitt des Endabschnitts des Grundkörpers mit wenigstens einem Teilabschnitt angeordnet ist

Durch Aufnehmen der Anzeigeeinrichtungen in dem Kanal jeweils ein Datenleitungsanschluss jeder Anzeigeeinrichtung mit der Datenleitung datenübertragbar verbindbar. Oder in anderen Worten: Durch Aufnehmen der Anzeigeeinrichtungen in dem Kanal ist von jeder Anzeigeeinrichtung jeweils ein Datenleitungsanschluss mit der Datenleitung datenübertragbar verbindbar.

Analog zu dem oben im Zusammenhang mit der Bereitstellung der Stromversorgung der Anzeigeeinrichtungen Dargelegten kann mittes dieser praktischen Ausführungsform des erfindungsgemäßen Systems eine Datenversorgung aller Anzeigeeinrichtungen einfach dadurch realisiert werden, dass die Anzeigeeinrichtungen in dem Kanal aufgenommen werden, die Abschlusseinrichtung mit dem Endabschnitt des Grundkörpers verbunden wird, hiernach eine datenübertragende Verbindung der wenigstens einen Datenversorgungsleitung der Abschlusseinrichtung - die bei dieser praktischen Ausführungsform zusätzlich zu den elektrischen Versorgungsleitungen vorgesehen ist -zu einer Datenquelle hergestellt wird. Bei den Daten der Datenquelle kann es sich insbesondere um typische warenbezogene Daten (wie z.B. den Preise einer Ware) handeln, die von der Datenquelle, wie z.B. einem Server, den elektronischen Anzeigeeinrichtungen über die wenigstens eine Datenversorgungsleitung, der wenigstens abschnittsweise in dem Kanal angeordneten Datenleitung und den jeweiligen Datenleitungsanschlüssen der Anzeigeeinrichtungen an die Anzeigeeinrichtungen zur digitalen Weiterverarbeitung übertragen werden können. Es versteht sich, dass über diesen Datenübertragungsweg insbesondere auch eine bidirektionale Datenkommunikation zwischen der Datenquelle und derjeweiligen Anzeigeeinrichtung realisierbar sein kann, sofern hierfür eine entsprechend eingerichtete Datenversorgungsleitung und eine hierfür entsprechend eingerichtete Datenleitung vorliegt.

Auch bei der obigen praktischen Ausführungsform können die mit den Stromleiter-Endabschnitten kontaktierbaren Versorgungsleitungs-Endabschnitte und der mit einem der Datenleitungs-Endabschnitte (bzw. Datenleitungsendabschnitte) verbindbare Endabschnitt der Datenversorgungsleitung an dem Einsteckköper der oben beschriebenen bevorzugten Ausführungsform des erfindungsgemäßen System vorgesehen sein. Da der Einsteckkörper in dem Kanal durch Einstecken kraftschlüssig aufnehmbar ist, können durch das Vorsehen der Versorgungsleitungs-Endabschnitte und des Datenleitungs-Endabschnitts an dem Einsteckkörper vorteilhaft auch stabile elektrisch leitende Kontaktierungen der Versorgungsleitungs-Endabschnitte mit den Stromleiter-Endabschnitten realisiert werden. Ferner kann dadurch auch ein stabile datenübertragende Verbindung des Endabschnitts der Datenversorgungsleitung der Abschlusseinrichtung mit dem Datenleitungs-Endabschnitt, der mit wenigstens einem Teilabschnitt in dem jeweiligen Kanal-Endabschnitt angeordnet ist, realisiert werden.

Das erfindungsgemäße System ist besondere vorteilhaft für die Anordnung in Umgebung bzw. in naher Umgebung von Ablagevorrichtungen, wie Regalböden von Warenregalen vorgesehen, wobei der extrudierte Grundkörper des Systems hierfür besonders bevorzugt an einem Regalboden eines Warenregals anbringbar sein kann, so dass ein Käufer bzw. ein potentieller Käufer einer Ware direkt die der Ware jeweils zugordnete Anzeigeeinrichtung identifizieren kann.

Bei dem Grundkörper handelt es sich vorteilhaft um einen extrudierten Grundkörper aus einem Kunststoffmaterial, also einen durch Extrusion hergestellten Grundkörper. Mittels Extrusion können im Rahmen einer automatisierten Fertigung eine Vielzahl von Grundkörpern mit gleichbleibender hoher Qualität gefertigt werden. Bei dem Kunststoffmaterial aus dem der Grundkörper besteht, kann es sich z.B. um thermoplastische Kunststoffe, duroplastische Kunststoffe und Elastomere handeln. Bevorzugte thermoplastische Kunststoffe sind: PVC, ABS, ASA, PET, PC, PS, PA sowie alle Kunststoffe aus der Gruppe der Polyolefine, der Polyacrylate, Polycarbonate und Polyester.

Die Erfindung betrifft auch ein Verfahren zum Bestromen mehrerer elektronischer Anzeigeeinrichtungen zur Anzeige von warenbezogenen Informationen mit einem erfindungsgemäßen System, das zur Bestromung der mehreren Anzeigeeinrichtungen vorgesehen ist, wobei das Verfahren die folgenden Schritte umfasst:
(A) Bereitstellen des Systems;
(B) Aufnehmen der Anzeigeeinrichtungen in dem Kanal des länglichen Grundkörpers,
(C) Verbinden der Abschlusseinrichtung mit einem Endabschnitt des Grundkörpers,
(D) Anschließen der Versorgungleitungen der Abschlusseinrichtung an eine Stromquelle, und
(E) Bestromen der Anzeigeeinrichtungen durch die Stromquelle.

Das erfindungsgemäße Verfahren ermöglicht eine auf einfache und praktische Weise realisierbare Bestromung der Anzeigeeinrichtungen mit dem für jede der Anzeigeeinrichtung erforderlichen Versorgungsstrom. Es sind lediglich die Schritte A bis E vorzunehmen, und zwar ohne, dass - wie es bei bekannten Lösungen der Fall ist - aufwendige Verkabelungsarbeiten vorgenommen werden müssen.

Es versteht sich, dass durch die Benennung der Schritte mit den Buchstaben A bis E keine Bindung an eine zeitliche Reihenfolge zu verstehen ist. So kann Schritt B nach Schritt C oder Schritt C nach Schritt B vorgenommen werden. Schritt D kann nach Schritt B oder C oder auch vor Schritt B oder vor Schritt C vorgenommen werden. Schritt E hingegen ist der letzte Schritt, da er das Bestromen der Anzeigeeinrichtungen durch die Stromquelle umfasst.

Nachfolgend werden Ausführungsbeispiele der Erfindung anhand der beigefügten Zeichnung näher erläutert. In der Zeichnung zeigt
- Fig1: eine schematische Darstellung eines ersten Ausführungsbeispiels eines erfindungsgemäßen Systems zur Bestromung mehrerer elektronischer Anzeigeeinrichtungen zur Anzeige von warenbezogenen Informationen,
- Fig.2: das System nach Fig. 1 mit einer Stromquelle,
- Fig.3: eine schematische Darstellung eines zweiten Ausführungsbeispiels eines erfindungsgemäßen Systems zur Bestromung mehrerer elektronischer Anzeigeeinrichtungen zur Anzeige von warenbezogenen Informationen,
- Fig. 4: das System nach Fig. 3 mit einer Stromquelle und einer Datenquelle,
- Fig.5: eine schematische Darstellung eines ersten Warenpräsentationssystems,
- Fig.6: eine schematische Darstellung eines zweiten Warenpräsentationssystems,
- Fig.7: eine Schnittdarstellung eines Grundkörpers eines dritten Ausführungsbeispiels eines erfindungsgemäßen Systems zur Bestromung mehrerer elektronischer Anzeigeeinrichtungen zur Anzeige von warenbezogenen Informationen,
- Fig.8: die Darstellung nach Fig. 7 mit einer Anzeigeeinrichtung,
- Fig.9: eine dreidimensionale Darstellung einer Abschlusseinrichtung des dritten Ausführungsbeispiels des Systems zur Bestromung der Anzeigeeinrichtungen,
- Fig.10A: eine dreidimensionale Darstellung des Grundkörpers nach Fig. 7 zusammen mit einer mit dem Grundkörper verbundenen Abschlusseinrichtung nach Fig. 9, und
- Fig.10B: den Grundkörper nach Fig. 10A ohne Abschlusseinrichtung.

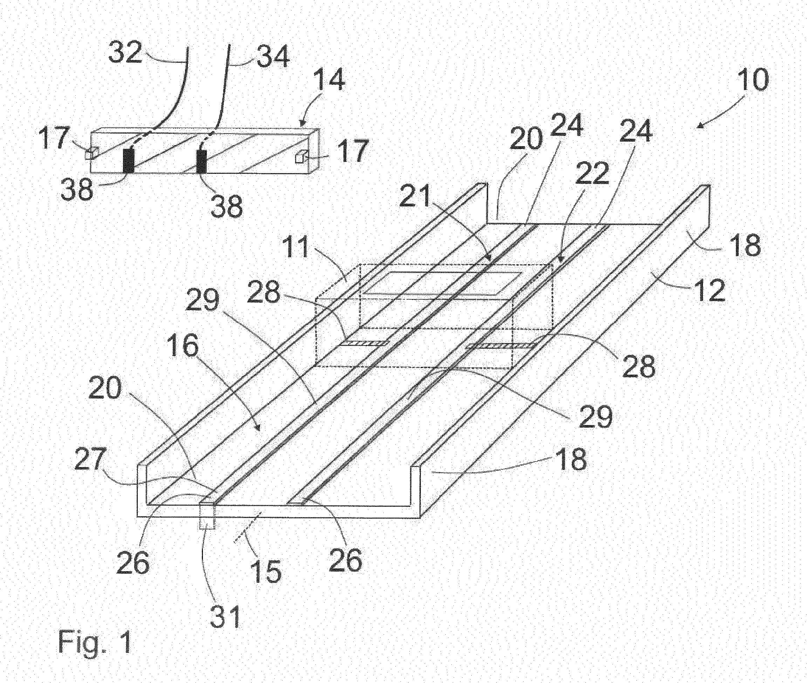

Das System 10 zur Bestromung mehrerer elektronischer Anzeigeeinrichtungen 11 zur Anzeige von warenbezogenen Informationen - in den Fig. 1 bis 4 ist nur jeweils eine schematisch veranschaulicht - weist einen länglichen extrudierten Grundkörper 12 aus einem Kunststoffmaterial und eine Abschlusseinrichtung 14 auf.

Der Grundkörper 12 weist einen sich über die gesamte Länge des Grundkörpers 12 erstreckenden Kanal 16 zur Aufnahme der Anzeigeeinrichtungen 11 auf.

Der Grundkörper 12 weist zwei entgegengesetzte Endabschnitte 18 auf. Jeder der Endabschnitte 18 weist einen von zwei entgegengesetzten Kanal-Endabschnitten 20 des Kanals 16 auf.

Die Anzeigeeinrichtungen 11 sind in dem Kanal 16, der zu beiden Stirnseiten und zu einer Längsseite hin offen bzw. zugänglich ist, entlang der Längsachse 15 des Grundkörpers 12 aufeinanderfolgend in dem Kanal 16 aufnehmbar bzw. unter Ausbildung einer sich entlang der Längsachse 15 des Grundkörpers 12 erstreckenden Reihe in dem Kanal 16 aufnehmbar bzw. aufeinanderfolgend aufnehmbar. Die Anzeigeeinrichtungen 11 können von der Längsseite her in dem Kanal 16 kraftschlüssig aufgenommen werden bzw. die Anzeigeeinrichtungen 11 können von der Längsseite her in dem Kanal 16 klemmend aufgenommen werden

Das System 10 weist zwei Stromleiter 21 und 22 auf, die bei diesem Ausführungsbeispiel beide in dem Kanal 16 angeordnet sind bzw. die beide in dem Kanal 16 vollständig bzw. zur Gänze angeordnet sind. Jeder Stromleiter 21, 22 ist in Form einer geradlinigen Leiterbahn 21, 22 ausgebildet. Jede Leiterbahn 21, 22 ist auf den Grundkörper 12 aufextrudiert.

Jeder der Stromleiter 21 und 22 weist zwei Stromleiter-Endabschnitte 24 und 26 und einen Zwischenabschnitt 29 auf, wobei die Stromleiter-Endabschnitte 24 und 26 jeweils durch den jeweiligen Zwischenabschnitt 29 miteinander verbunden sind. Der Zwischenabschnitt 29 jedes Stromleiters 21 und 22 ist in dem Kanal 16 angeordnet und von jedem Stromleiter 21 und 22 ist jeweils einer der Stromleiter-Endabschnitte 24 und 26 in jeweils einem der beiden entgegengesetzten Kanal-Endabschnitte 20 angeordnet bzw. vollständig oder zur Gänze angeordnet. Allerdings ist erfindungsgemäß selbstverständlich eine Beschränkung auf ein Anordnung bzw. eine vollständige Anordnung der Stromleiter-.Endabschnitte 24 und 26 in den Kanal-Endabschnitten20 nicht vorgesehen. So kann wenigstens einer der Stromleiter-Endabschnitte 24 und 26 bei einem alternativen Ausführungsbeispiel auch mit einem Teilabschnitt 31 außerhalb des Kanals 16 angeordnet sein und mit einem anderen Teilabschnitt 27 in dem Kanal-Endabschnitt 20 angeordnet sein, wie es in Fig. 1 schematisch veranschaulicht ist.

Durch Aufnehmen der Anzeigeeinrichtungen 11 in dem Kanal 16 ist jeweils ein Stromversorgungskontakt 28 jeder Anzeigeeinrichtung 11 mit jeweils einem der Stromleiter 21 und 22 elektrisch leitend kontaktierbar.

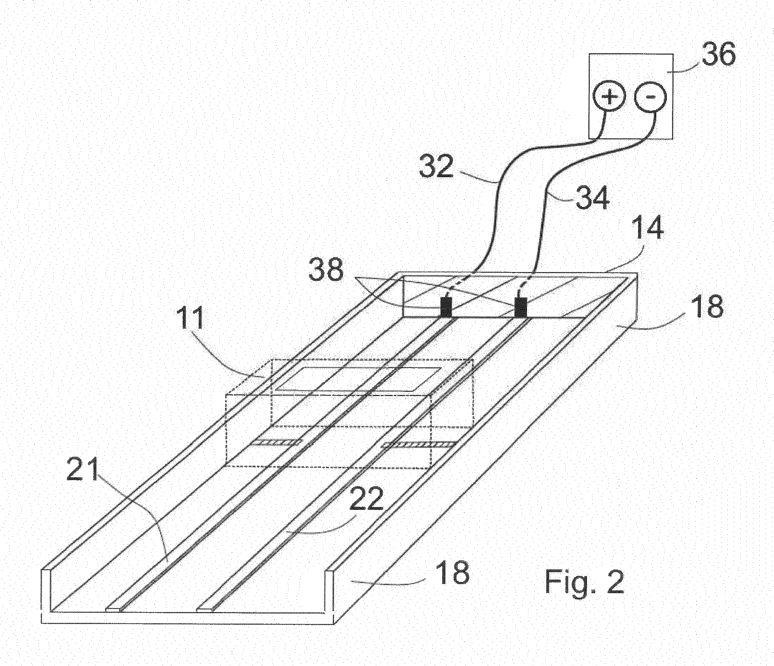

Die Abschlusseinrichtung 14 weist zwei elektrische Versorgungsleitungen 32 und 34 auf, die zum Herstellen einer Verbindung mit einer Stromquelle 36 (vgl. auch Fig. 2) vorgesehen sind.

Die Abschlusseinrichtung 14 ist mit jedem der beiden entgegengesetzten Endabschnitte 18 des Grundkörpers 12 verbindbar. Durch Verbinden der Abschlusseinrichtung 14 mit einem der beiden Endabschnitte 18 des Grundkörpers 12 ist jeweils ein Versorgungsleitungs-Endabschnitt 38 jeder der Versorgungsleitungen 32 und 34 mit jeweils einem Stromleiter-Endabschnitt 24 bzw. 26 der Stromleiter-Endabschnitte elektrisch leitend kontaktierbar, die in dem Kanal-Endabschnitt 20 des Endabschnitts18 des Grundkörpers 12 angeordnet sind, wobei der Endabschnitt 18 der Endabschnitt 18 ist, der zur Herstellung der Verbindung mit der Abschlusseinrichtung 14 vorgesehen ist. Die Fig. 2 veranschaulicht hierbei den Zustand, in welchem die Abschlusseinrichtung 14 mit dem hinteren Endabschnitt 18 verbunden ist, wobei die Kontaktierung der Versorgungsleitungs-Endabschnitte 38 mit den Stromleiter-Endabschnitten 24 bei diesem Ausführungsbeispiel jeweils durch Kontaktierung der Versorgungsleitungs-Endabschnitte 38 mit der Stirnseiten des jeweiligen Stromleiter-Endabschnitts 24 erfolgt.

Zur Realisierung einer kraftschlüssigen Verbindung der Abschlusseinrichtung 14 mit dem jeweiligen Grundkörper-Endabschnitt 18 weist die Abschlusseinrichtung 14 zwei Einsteckzapfen 17 auf, die in Aufnahmen (nicht dargestellt) einsteckbar sind, die stirnseitig an den Endabschnitten 18 des Grundkörpers 12 vorgesehen sind.

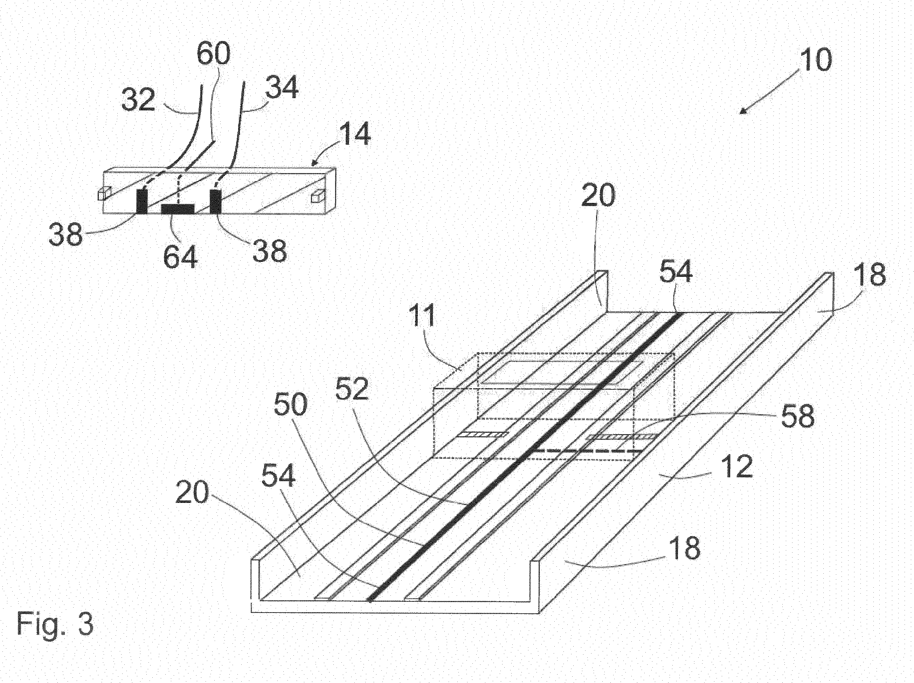

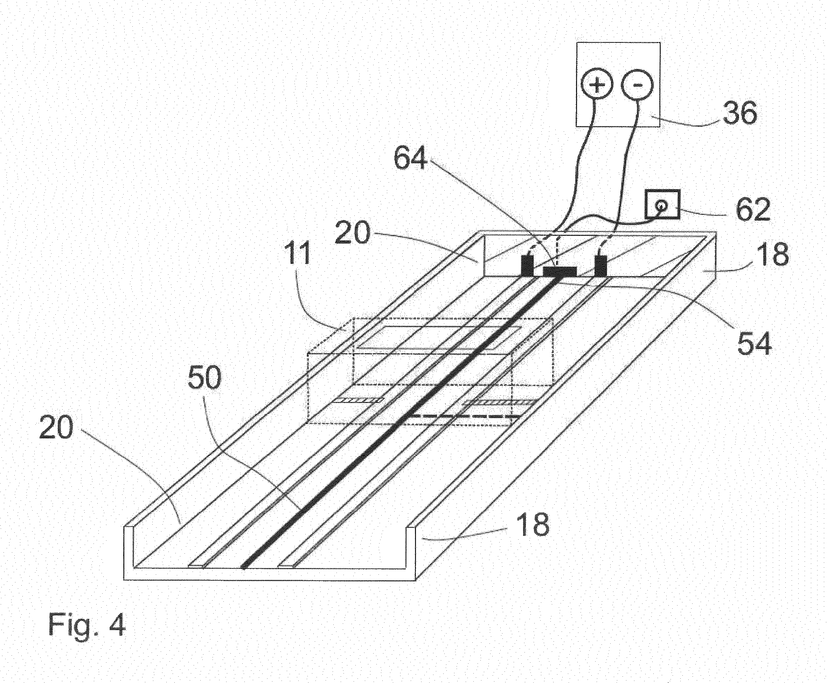

Das System 10 nach den Fig. 3 und 4 unterscheidet sich von dem System nach den Fig. 1 und 2 dadurch, dass dieses System 10 zusätzlich eine Datenleitung 50 mit einem Zwischenabschnitt 52 und zwei Datenleitungs-Endabschnitten 54 aufweist. Bei der länglichen bzw. geradlinig ausgebildete Datenleitung 50 ist der Zwischenabschnitt 52 der Datenleitung 50 in dem Kanal 16 angeordnet ist und es ist auch jeweils einer der Datenleitungs-Endabschnitte 54 in jeweils einem der beiden entgegengesetzten Kanal-Endabschnitte 20 angeordnet, und zwar vollständig angeordnet, so dass also die Datenleitung 50 in dem Kanal 16 angeordnet ist bzw. vollständig bzw. zur Gänze in dem Kanal 16 angeordnet ist. Allerdings ist erfindungsgemäß auch hier selbstverständlich eine Beschränkung auf ein Anordnung bzw. eine vollständige Anordnung der Datenleitungs-Endabschnitte 54 in den Kanal-Endabschnitten 20 nicht vorgesehen. So kann wenigstens einer der Datenleitungs-Endabschnitte 54 bei einem alternativen Ausführungsbeispiel auch mit einem Teilabschnitt außerhalb des Kanals 16 angeordnet sein.

Im Unterschied zu dem System 10 nach den Fig. 1 und 2 ist bei dem System nach den Fig. 3 und 4 durch Aufnehmen der Anzeigeeinrichtungen 11 in dem Kanal 16 auch jeweils ein Datenleitungsanschluss 58 jeder Anzeigeeinrichtung 11 mit der Datenleitung 50 datenübertragbar verbindbar.

Im Unterschied zu dem System 10 nach den Fig. 1 und 2 weist bei dem System nach den Fig. 3 und 4 die Abschlusseinrichtung 14 zusätzlich eine Datenversorgungsleitung 60 auf, die zum Herstellen einer datenübertragenden Verbindung mit einer Datenquelle 62 (vgl. Fig. 4) vorgesehen ist.

Durch Verbinden der Abschlusseinrichtung 14 mit einem der Endabschnitte 18 des Grundkörpers 12 ist ein Endabschnitt 64 der Datenversorgungsleitung 60 mit dem Datenleitungs-Endabschnitt 54 datenübertragbar verbindbar, der in dem Kanal-Endabschnitt 20 des Endabschnitts 18 des Grundkörpers 12 angeordnet ist (vgl. hierzu auch Fig. 4, welche die verbundene Situation veranschaulicht), der zur Herstellung der Verbindung mit der Abschlusseinrichtung 14 vorgesehen ist.

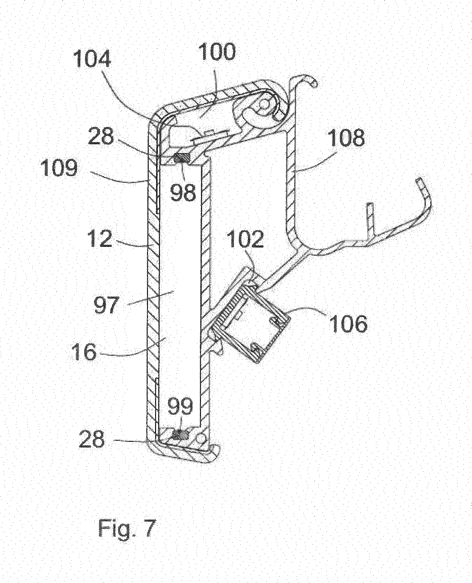

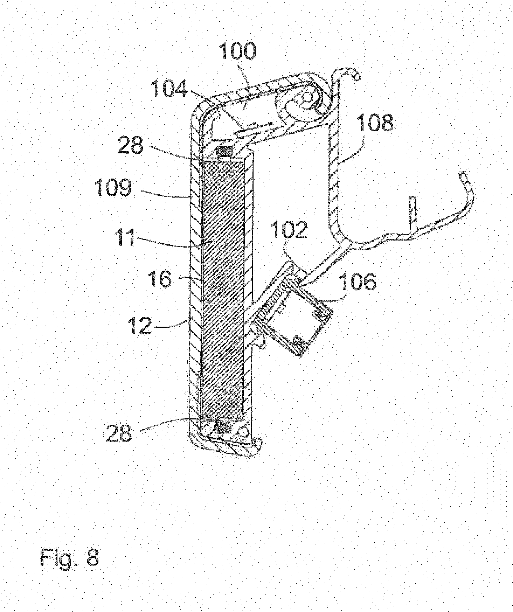

Der Grundkörpers 12 nach Fig. 7 eines dritten Ausführungsbeispiels eines erfindungsgemäßen Bestromungssystems 10 unterscheidet sich von den Grundkörpern 12 nach den Fig. 1 bis 4 im Wesentlichen dadurch, dass der Kanal 16 des extrudierten Grundkörpers 12 drei zusammenhängende Teilbereiche 97, 98 und 99 umfasst, die im Querschnitt rechteckförmig ausgebildet sind. In den jeweils kleineren Teilbereichen 98, 99 ist jeweils einer der Stromleiter 21,22 angeordnet. In der Schnittdarstellung nach Fig. 8 ist die elektrisch leitende Kontaktierung mit den Stromversorgungskontakten 28 einer Anzeigeeinrichtung 11 veranschaulicht, die in dem Kanal 16 aufgenommen ist.

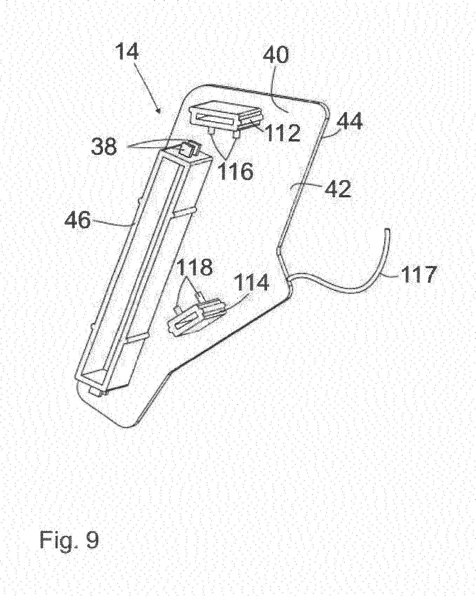

Ferner weist der Grundkörper 12 nach den Fig. 7 und 9 zwei weitere Kanäle 100 und 102 auf, die sich über die gesamte Länge des Grundkörpers 12 erstrecken. Beide Kanäle 100 und 102 sind jeweils zu einer Längsseite des Grundkörpers 12 hin offen ausgebildet. In dem Kanal 100 ist ein Sensor 104 zu Signalisieren eines Eintritts eines Objekts in einen vom dem Kanal 100 beabstandeten Bereich angeordnet. In dem anderen Kanal 102 ist eine Leuchte 106 zur Beleuchtung benachbarter Bereiche angeordnet. Über den klauenartigen Bereich 108 ist der Grundkörper 12 an eine Ablagevorrichtung eines Warenpräsentationssystems anhängbar ausgebildet. Das System 10 nach den Fig. 7 und 8 weist ferner ein extrudiertes Bedeckungselement 109 zum Bedecken der Kanäle 16 und 100 auf.

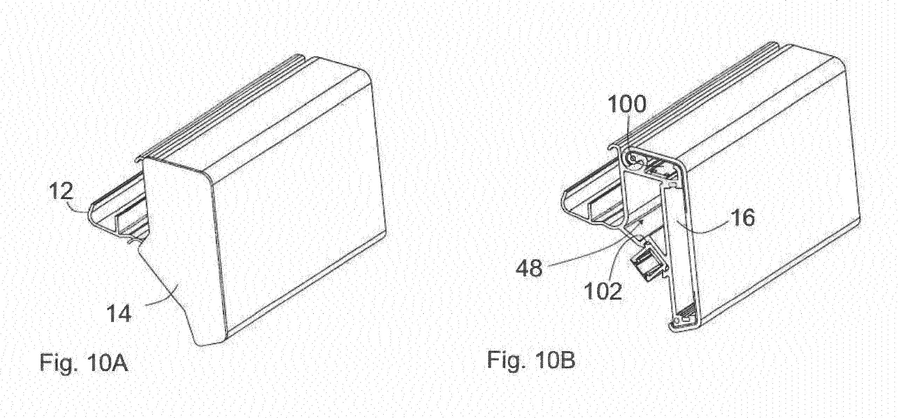

Die Abschlusseinrichtung 14 (vgl. Fig. 9) des Systems mit dem Grundkörper 12 nach den Fig. 7 und 8 weist einen Flachkörper 40 aus einem Kunststoffmaterial mit zwei entgegengesetzten Seiten 42 und 44 und einen mit der Seite 42 verbundenen Einsteckkörper 46 aus einem Kunststoffmaterial auf. Der Einsteckköper 46 ist zum Verbinden der Abschlusseinrichtung 14 mit einem Endabschnitt 18 des Grundkörpers 12 durch stirnseitiges Einstecken in den Kanal 16 in dem Kanal 16 kraftschlüssig aufnehmbar-vgl. hierzu auch Fig. 10A. Die mit den jeweiligen Stromleiter-Endabschnitten des Kanals 16 kontaktierbaren Versorgungsleitungs-Endabschnitte 38 sind an dem Einsteckköper 46 vorgesehen, wobei bei diesem Ausführungsbeispiel sowohl der obere als auch der untere Versorgungsleitungs-Endabschnitt 38 jeweils in Form eines Doppel-Kontakts ausgebildet sind.

Die Abschlusseinrichtung 14 nach Fig. 9 weist ferner einen zweiten und einen dritten Einsteckkörper 112, 114 auf. Der zweite Einsteckköper 112 weist zwei Anschlusselemente 116 für die Spannungsversorgung des Sensors 104 auf, die mit nicht dargestellten Versorgungsleitungen des Sensor 104, die in dem Kanal 100 angeordnet sind, durch Einstecken des Einsteckkörpers 112 in den Kanal kontaktierbar sind. Die Anschlusselemente 116 selbst sind wiederum jeweils elektrisch leitend mit jeweils einer Leitung verbunden, die abschnittsweise in einer Ummantelung eines Kabel 117 aufgenommen ist, in dem auch die Versorgungsleitungen für die Stromversorgung der Anzeigeeinrichtungen abschnittsweise aufgenommen sind. Entsprechendes trifft auch für den dritten Einsteckkörper 114 zu. Der dritte Einsteckköper 114 weist zwei Anschlusselemente 118 für die Spannungsversorgung der Leuchte 106 auf, die mit nicht dargestellten Versorgungsleitungen der Leuchte 106, die in dem Kanal 102 angeordnet sind, durch Einstecken des Einsteckkörpers 112 in den Kanal kontaktierbar sind. Die Anschlusselemente 118 selbst sind wiederum jeweils elektrisch leitend mit jeweils einer Leitung verbunden, die abschnittsweise in der Ummantelung des Kabels 117 aufgenommen ist, in dem auch die Versorgungsleitungen für die Stromversorgung der Anzeigeeinrichtungen abschnittswese aufgenommen sind. Sämtliche in der Ummantelung des Kabels 117 abschnittsweise aufgenommenen Leitungen können bei einem erfindungsgemäßen Warenpräsentationssystem über jeweilige an wenigstens einem Halteelement vorgesehene Anschlusselemente durch Aufnehmen des Halteelements in der jeweiligen Aufnahme des Haltepfostens bestromt werden, und zwar zur Stromversorgung der Anzeigeeinrichtungen 11, des Sensors 104 und der Leuchte 106.

Optisch sehr ansprechend ist die Stirnseite 48 des Grundkörpers 12 (vgl. Fig. 10A) durch stirnseitiges Einstecken des Einsteckkörpers 46 und der Einsteckkörper 112 und 114 in den Kanal 16 von dem Flachkörper 40 der Abschlusseinrichtung 14 bedeckbar.

Bei einem Ausführungsbeispiel des erfindungsgemäßen Verfahrens zum Bestromen mehrerer elektronischer Anzeigeeinrichtungen 11 zur Anzeige von warenbezogenen Informationen mit einem System 10 nach den Fig. 1 und 2 umfasst das Verfahren die folgenden Schritte:
(A) Bereitstellen des Systems (10),
(B) Aufnehmen der Anzeigeeinrichtungen 11 in dem Kanal 16 des länglichen Grundkörpers 12 (in den Fig. 1 und 2 ist nur eine Anzeigeeinrichtung 11 schematisch veranschaulicht)
(C) Verbinden der Abschlusseinrichtung 14 mit einem Endabschnitt 18 des Grundkörpers 12 (vgl. Fig. 2, die den verbundenden Zustand veranschaulicht),
(D) Anschließen der Versorgungleitungen 32 und 34 der Abschlusseinrichtung 14 an eine Stromquelle 36 (vgl. Fig.2, die die Versorgungsleitungen 32 und 34 im schon angeschlossenen Zustand zeigt), und
(E) Bestromen der Anzeigeeinrichtungen 11 durch die Stromquelle 36.

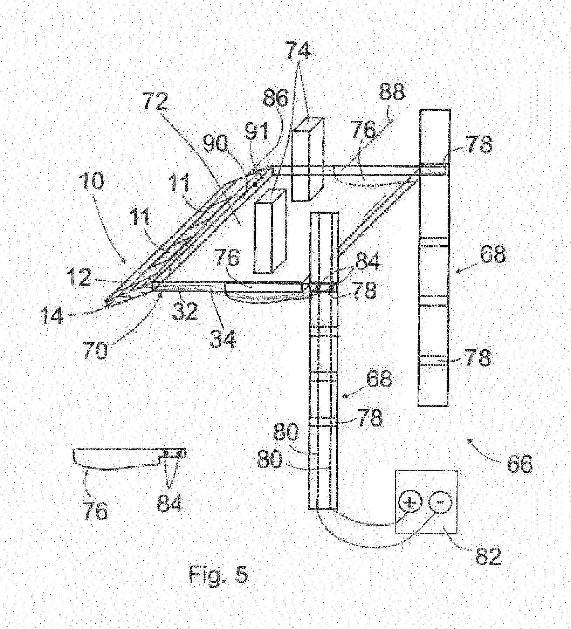

Das Warenpräsentationssystem 66 nach Fig. 5 umfasst das System 10 zur Bestromung mehrerer elektronischer Anzeigeeinrichtungen 11 zur Anzeige von warenbezogenen Informationen, zwei Haltepfosten 68 und eine Ablagevorrichtung 70, wobei bei alternativen Ausführungsbeispielen selbstverständlich auch eine höhere Anzahl von Haltepfosten und Ablagevorrichtungen vorgesehen sein können.

Die Ablagevorrichtung 70 weist ein Ablageelement 72 zum Ablegen von Waren 74 und zwei Halteelemente 76 auf.

Die Halteelemente 76 sind mit dem Ablageelement 72 lösbar verbunden, und zwar durch nicht dargestellte Aufnahmen an dem Ablageelement 72, in welche nicht dargestellte Laschen der Halteelemente 76 einführbar sind.

Jeder Haltepfosten 68 weist vier Aufnahmen 78 auf, wobei in jeder der Aufnahmen 78 jeweils eines der Halteelemente 76 zum Halten der Ablagevorrichtung 70 an den Haltepfosten 68 aufnehmbar ist. Die Fig. 5 veranschaulicht hierbei schon den Zustand, in welchem die Halteelemente 76 in jeweils einer von zwei gegenüberliegenden Aufnahmen 78 aufgenommen sind, wobei sich eine Aufnahme 78 an dem einen Haltepfosten 68 und die andere Aufnahmen 78 an dem anderen Haltepfosten 68 befindet.

Einer der beiden Haltepfosten 68 weist zwei elektrische Leiter 80 auf, die zum Anschließen an eine Stromquelle 82 vorgesehen sind.

Eines der Haltelemente 76 weist zwei elektrische Anschlusselemente 84 auf, wobei an jedes Anschlusselement 84 jeweils eine der Versorgungsleitungen 32 bzw. 34 der Abschlusseinrichtung 14 elektrisch leitend anschließbar ist.

Jedes Anschlusselement 84 ist durch Aufnehmen des Halteelements 76 in der jeweiligen Aufnahme 78 des Haltepfostens 68 mit jeweils einem der Leiter 80 des Haltepfostens 68 elektrisch leitend kontaktierbar.

Der längliche Grundkörper 12 des Bestromungssystems 10 ist an der Ablagevorrichtung 70 anbringbar, wobei die Fig. 5 schon den angebrachten Zustand veranschaulicht. Das Ablageelement 72 ist länglich ausgebildet und der längliche Grundkörper 12 ist an der Ablagevorrichtung 70 in einer Anordnung anbringbar ist, bei welcher eine sich entlang der Längsachse 86 des Grundkörpers 12 erstreckende Fläche 90 des Grundkörpers 12 einer sich entlang der Längsachse 88 des Ablageelements 72 erstreckenden Fläche 91 des Ablageelements 72 zugewandt ist.

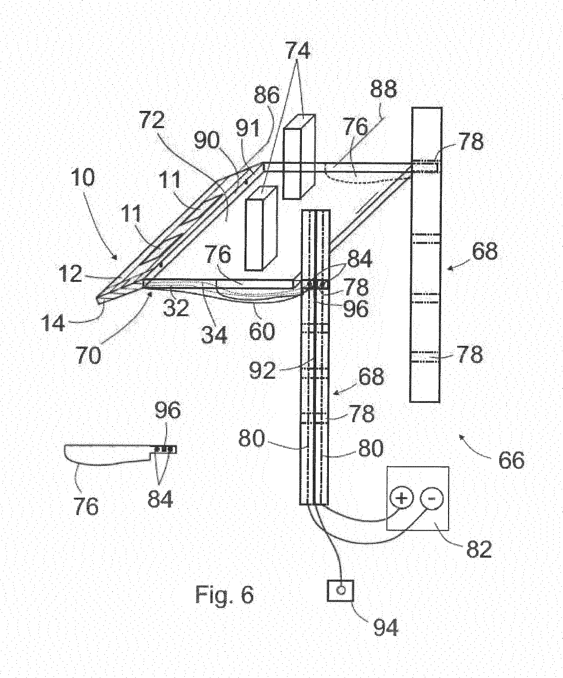

Das Warenpräsentationssystem 66 nach Fig. 6 unterscheidet sich von dem Warenpräsentationssystem 66 nach Fig. 5 dadurch, dass der Haltepfosten 68 zusätzlich eine Datenleitung 92 aufweist, die zum Anschließen an eine Datenquelle 94 vorgesehen ist. Das Haltelemente 76 mit den elektrischen Anschlusselementen 84 weist zusätzlich einen Datenleitungsanschluss 96 aufweist, wobei an den Datenleitungsanschluss 96 die Datenversorgungsleitung 60 der Abschlusseinrichtung 14 anschließbar ist. Der Datenleitungsanschluss 96 ist durch Aufnehmen des Halteelements 76 in der Aufnahme 78 des Haltepfostens 68 mit der Datenleitung 92 des Haltepfostens 68 datenübertragbar verbindbar.

### Bezugszeichenliste

- 10: System
- 11: Anzeigeeinrichtung
- 12: Grundkörper
- 14: Abschlusseinrichtung
- 15: Längsachse
- 16: Kanal
- 17: Einsteckzapfen
- 18: Endabschnitt
- 20: Kanal-Endabschnitt
- 21: Stromleiter
- 22: Stromleiter
- 24: Stromleiter-Endabschnitt
- 26: Stromleiter-Endabschnitt
- 27: Teilabschnitt
- 28: Stromversorgungskontakt
- 29: Zwischenabschnitt
- 31: Teilabschnitt
- 32: Versorgungsleitung
- 34: Versorgungsleitung
- 36: Stromquelle
- 38: Versorgungsleitungs-Endabschnitt
- 40: Flachkörper
- 42: Seite
- 44: Seite
- 46: Einsteckkörper
- 48: Stirnseite
- 50: Datenleitung
- 52: Zwischenabschnitt
- 54: Datenleitungs-Endabschnitt
- 58: Datenleitungsanschluss
- 60: Datenversorgungsleitung
- 62: Datenquelle
- 64: Endabschnitt
- 66: Warenpräsentationssystem
- 68: Haltepfosten
- 70: Ablagevorrichtung
- 72: Ablageelement
- 74: Ware
- 76: Halteelement
- 78: Aufnahme
- 80: Leiter
- 82: Stromquelle
- 84: Anschlusselement
- 86: Längsachse Grundkörper
- 88: Längsachse Ablageelement
- 90: Fläche
- 91: Fläche
- 92: Datenleitung Haltepfosten
- 94: Datenquelle
- 96: Datenleitungsanschluss
- 97: Teilbereich
- 98: Teilbereich
- 99: Teilbereich
- 100: Kanal
- 102: Kanal
- 104: Sensor
- 106: Leuchte
- 108: Klauenartige Bereich
- 109: Bedeckungselement
- 112: Einsteckkörper
- 114: Einsteckkörper
- 116: Anschlusselement
- 117: Kabel
- 118: Anschlusselement

## Patentansprüche

1. Verfahren zum Bestromen mehrerer elektronischer Anzeigeeinrichtungen (11) zur Anzeige von warenbezogenen Informationen mit einem System (10, das zur Bestromung mehrerer elektronischer Anzeigeeinrichtungen (11) zur Anzeige von warenbezogenen Informationen vorgesehen ist,
- wobei das System (10) einen länglichen Grundkörper (12) aus einem Kunststoffmaterial und wenigstens eine Abschlusseinrichtung (14) aufweist,
- wobei der Grundkörper (12) einen sich über die gesamte Länge des Grundkörpers (12) erstreckenden Kanal (16) zur Aufnahme der Anzeigeeinrichtungen (11) aufweist,
- wobei der Grundkörper (12) zwei entgegengesetzte Endabschnitte (18) aufweist, wobei jeder der Endabschnitte (18) einen von zwei entgegengesetzten Kanal-Endabschnitten (20) des Kanals (16) aufweist,
- wobei die Anzeigeeinrichtungen (11) in dem Kanal (16) aufnehmbar sind,
- wobei das System (10) wenigstens zwei Stromleiter (21, 22) aufweist,
- wobei jeder der Stromleiter (21, 21) zwei Stromleiter-Endabschnitte (24, 26) und einen Zwischenabschnitt (29) aufweist,
- wobei der Zwischenabschnitt (29) jedes Stromleiters (21, 22) in dem Kanal (16) angeordnet ist und von jedem Stromleiter (21,22) jeweils einer der Stromleiter-Endabschnitte (24, 26) in jeweils einem der beiden entgegengesetzten Kanal-Endabschnitte (20) mit wenigstens einem Teilabschnitt (27) angeordnet ist,
- wobei durch Aufnehmen der Anzeigeeinrichtungen (11) in dem Kanal (16) jeweils ein Stromversorgungskontakt (28) jeder Anzeigeeinrichtung (11) mit jeweils einem der Stromleiter (21, 22) elektrisch leitend kontaktierbar ist,
- wobei die Abschlusseinrichtung (14) wenigstens zwei elektrische Versorgungsleitungen (32, 34) aufweist, die zum Herstellen einer Verbindung mit einer Stromquelle (36) vorgesehen sind,
- wobei die Abschlusseinrichtung (14) mit wenigstens einem der beiden entgegengesetzten Endabschnitte (18) des Grundkörpers (12) lösbar verbindbar ist,
- wobei durch Verbinden der Abschlusseinrichtung (14) mit dem Endabschnitt (18) des Grundkörpers (12) jeweils ein Versorgungsleitungs-Endabschnitt (38) jeder der Versorgungsleitungen (32, 34) mit jeweils einem Stromleiter-Endabschnitt (24, 26) der Stromleiter-Endabschnitte (24, 26) elektrisch leitend kontaktierbar ist, die in dem Kanal-Endabschnitt (20) des Endabschnitts (18) des Grundkörpers (12) mit wenigstens einem Teilabschnitt (27) angeordnet sind,
- wobei die Abschlusseinrichtung (14) einen Flachkörper (40) aus einem Kunststoffmaterial mit zwei entgegengesetzten Seiten (42, 44) und wenigstens einen mit einem der beiden Seiten (42, 44) verbundenen Einsteckkörper (46) aus einem Kunststoffmaterial aufweist,
- wobei der Einsteckkörper (46) zum Verbinden der Abschlusseinrichtung (14) mit dem Endabschnitt (18) des Grundkörpers (12) durch stirnseitiges Einstecken in den Kanal (16) in dem Kanal (16) kraftschlüssig aufnehmbar ist,
- wobei die mit den Stromleiter- Endabschnitten (24, 26) kontaktierbaren Versorgungsleitungs-Endabschnitte (38) an dem Einsteckköper (46) vorgesehen sind,
- wobei die Stirnseite (48) des Grundkörpers (12) durch stirnseitiges Einstecken des Einsteckkörpers (46) in den Kanal (16) von dem Flachkörper (40) bedeckbar ist,
- wobei der Flachkörper (40) eine Ausbildung aufweist, die durch stirnseitiges Einstecken des Einsteckkörpers (46) in den Kanal (16) bündig an den Grundkörper (12) anschließbar ist,
wobei das Verfahren die folgenden Schritte umfasst:
(A) Bereitstellen des Systems (10),
(B) Aufnehmen der Anzeigeeinrichtungen (11) in dem Kanal (16) des länglichen Grundkörpers (12),
(C) Verbinden der Abschlusseinrichtung (14) mit einem Endabschnitt (18) des Grundkörpers (12),
(D) Anschließen der Versorgungleitungen (32, 34) der Abschlusseinrichtung (14) an eine Stromquelle (36), und
(E) Bestromen der Anzeigeeinrichtungen (11) durch die Stromquelle (36).

2. System (10), das zur Bestromung mehrerer elektronischer Anzeigeeinrichtungen (11) zur Anzeige von warenbezogenen Informationen vorgesehen ist,
- wobei das System (10) einen länglichen Grundkörper (12) aus einem Kunststoffmaterial und wenigstens eine Abschlusseinrichtung (14) aufweist,
- wobei der Grundkörper (12) einen sich über die gesamte Länge des Grundkörpers (12) erstreckenden Kanal (16) zur Aufnahme der Anzeigeeinrichtungen (1 1 ) aufweist,
- wobei der Grundkörper (12) zwei entgegengesetzte Endabschnitte (18) aufweist, wobei jeder der Endabschnitte (18) einen von zwei entgegengesetzten Kanal-Endabschnitten (20) des Kanals (16) aufweist,
- wobei die Anzeigeeinrichtungen (11) in dem Kanal (16) aufnehmbar sind,
- wobei das System (10) wenigstens zwei Stromleiter (21, 22) aufweist,
- wobei jeder der Stromleiter (21, 22) zwei Stromleiter-Endabschnitte (24, 26) und einen Zwischenabschnitt (29) aufweist,
- wobei der Zwischenabschnitt (29) jedes Stromleiters (21, 22) in dem Kanal (16) angeordnet ist und von jedem Stromleiter (21 ,22) jeweils einer der Stromleiter-Endabschnitte (24, 26) in jeweils einem der beiden entgegengesetzten Kanal-Endabschnitte (20) mit wenigstens einem Teilabschnitt (27) angeordnet ist,
- wobei durch Aufnehmen der Anzeigeeinrichtungen (11) in dem Kanal (16) jeweils ein Stromversorgungskontakt (28) jeder Anzeigeeinrichtung (11) mit jeweils einem der Stromleiter (21, 22) elektrisch leitend kontaktierbar ist,
- wobei die Abschlusseinrichtung (14) wenigstens zwei elektrische Versorgungsleitungen (32, 34) aufweist, die zum Herstellen einer Verbindung mit einer Stromquelle (36) vorgesehen sind,
- wobei die Abschlusseinrichtung (14) mit wenigstens einem der beiden entgegengesetzten Endabschnitte (18) des Grundkörpers (12) lösbar verbindbar ist,
- wobei durch Verbinden der Abschlusseinrichtung (14) mit dem Endabschnitt (18) des Grundkörpers (12) jeweils ein Versorgungsleitungs-Endabschnitt (38) jeder der Versorgungsleitungen (32, 34) mit jeweils einem Stromleiter-Endabschnitt (24, 26) der Stromleiter-Endabschnitte (24, 26) elektrisch leitend kontaktierbar ist, die in dem Kanal-Endabschnitt (20) des Endabschnitts (18) des Grundkörpers (12) mit wenigstens einem Teilabschnitt (27) angeordnet sind,
- wobei die Abschlusseinrichtung (14) einen Flachkörper (40) aus einem Kunststoffmaterial mit zwei entgegengesetzten Seiten (42, 44) und wenigstens einen mit einem der beiden Seiten (42, 44) verbundenen Einsteckkörper (46) aus einem Kunststoffmaterial aufweist,
- wobei der Einsteckkörper (46) zum Verbinden der Abschlusseinrichtung (14) mit dem Endabschnitt (18) des Grundkörpers (12) durch stirnseitiges Einstecken in den Kanal (16) in dem Kanal (16) kraftschlüssig aufnehmbar ist,
- wobei die mit den Stromleiter- Endabschnitten (24, 26) kontaktierbaren Versorgungsleitungs-Endabschnitte (38) an dem Einsteckköper (46) vorgesehen sind,
- wobei die Stirnseite (48) des Grundkörpers (12) durch stirnseitiges Einstecken des Einsteckkörpers (46) in den Kanal (16) von dem Flachkörper (40) bedeckbar ist,
- wobei der Flachkörper (40) eine Ausbildung aufweist, die durch stirnseitiges Einstecken des Einsteckkörpers (46) in den Kanal (16) bündig an den Grundkörper (12) anschließbar ist.

3. System (10) nach Anspruch 2, **dadurch gekennzeichnet, dass** das System (10) wenigstens eine Datenleitung (50) aufweist, wobei die Datenleitung (50) einen Zwischenabschnitt (52) und zwei Datenleitungs-Endabschnitte (54) aufweist,
- wobei der Zwischenabschnitt (52) der Datenleitung (50) in dem Kanal (16) angeordnet ist und jeweils einer der Datenleitungs-Endabschnitte (54) in jeweils einem der beiden entgegengesetzten Kanal-Endabschnitte (20) mit wenigstens einem Teilabschnitt angeordnet ist,
- wobei durch Aufnehmen der Anzeigeeinrichtungen (11) in dem Kanal (16) jeweils ein Datenleitungsanschluss (58) jeder Anzeigeeinrichtung (11) mit der Datenleitung (50) datenübertragbar verbindbar ist,
- wobei die Abschlusseinrichtung (14) wenigstens eine Datenversorgungsleitung (60) aufweist, die zum Herstellen einer datenübertragenden Verbindung mit einer Datenquelle (62) vorgesehen ist,
- wobei durch Verbinden der Abschlusseinrichtung (14) mit dem Endabschnitt (18) des Grundkörpers (12) ein Endabschnitt (64) der Datenversorgungsleitung (60) mit dem Datenleitungs-Endabschnitt (54) datenübertragbar verbindbar ist, der in dem Kanal-Endabschnitt (20) des Endabschnitts (18) des Grundkörpers (12) mit wenigstens einem Teilabschnitt angeordnet ist.

4. System (10) nach Anspruch 2 und 3, **dadurch gekennzeichnet, dass** die mit den Stromleiter-Endabschnitten (24, 26) kontaktierbaren Versorgungsleitungs-Endabschnitte (38) und der mit einem der Datenleitungs-Endabschnitte (54) verbindbare Endabschnitt (64) der Datenversorgungsleitung (60) an dem Einsteckköper (46) vorgesehen sind.

## Claims

1. Method for powering a plurality of electronic display devices (11) for displaying goods-related information with a system (10), which is provided for powering a plurality of electronic display devices (11) for displaying goods-related information,
- wherein the system (10) has an elongated base body (12) made of a plastics material and at least one closure device (14),
- wherein the base body (12) has a channel (16) extending over the entire length of the base body (12) for receiving the display devices (11),
- wherein the base body (12) has two opposing end portions (18), wherein each of the end portions (18) has one of two opposing channel end portions (20) of the channel (16),
- wherein the display devices (11) are receivable in the channel (16),
- wherein the system (10) has at least two current conductors (21, 22),
- wherein each of the current conductors (21, 21) has two current-conductor end portions (24, 26) and an intermediate portion (29),
- wherein the intermediate portion (29) of each current conductor (21, 22) is arranged in the channel (16) and each of the current-conductor end portions (24, 26) of each current conductor (21, 22) is arranged with at least a partial portion (27) in one of the two opposing channel end portions (20),
- wherein by receiving the display devices (11) in the channel (16), a power supply contact (28) of each display device (11) is contactable in an electrically conductive manner with one of the current conductors (21, 22) in each case,
- wherein the closure device (14) has at least two electrical supply lines (32, 34), which are provided for making a connection with a power source (36),
- wherein the closure device (14) is releasably connectable to at least one of the two opposing end portions (18) of the base body (12),
- wherein by connecting the closure device (14) to the end portion (18) of the base body (12) a supply-line end portion (38) of each of the supply lines (32, 34) is in each case contactable in an electrically conductive manner with one current-conductor end portion (24, 26) of the current-conductor end portions (24, 26) which are arranged with at least a partial portion (27) in the channel end portion (20) of the end portion (18) of the base body (12),
- wherein the closure device (14) has a flat body (40) made of a plastics material with two opposing sides (42, 44) and has at least one insertable body (46) made of a plastics material, which is connected to one of the two sides (42, 44),
- wherein the insertable body (46) for connecting the closure device (14) to the end portion (18) of the base body (12) is receivable in the channel (16) in a force-fitting manner by inserting it into the channel (16) on the end face,
- wherein the supply-line end portions (38) that are contactable with the current-conductor end portions (24, 26) are provided on the insertable body (46),
- wherein the end face (48) of the base body (12) can be covered by the flat body (40) by inserting the insertable body (46) into the channel (16) on the end face,
- wherein the flat body (40) has a configuration which, by inserting the insertable body (46) into the channel (16) on the end face, can be attached to the base body (12) in a flush manner,
wherein the method comprises the following steps:
(A) preparing the system (10),
(B) receiving the display devices (11) in the channel (16) of the elongated base body (12),
(C) connecting the closure device (14) to an end portion (18) of the base body (12),
(D) attaching the supply lines (32, 34) of the closure device (14) to a power source (36), and
(E) powering the display devices (11) by the power source (36).

2. System (10), which is provided for powering a plurality of electronic display devices (11) for displaying goods-related information,
- wherein the system (10) has an elongated base body (12) made of a plastics material and at least one closure device (14),
- wherein the base body (12) has a channel (16) extending over the entire length of the base body (12) for receiving the display devices (11),
- wherein the base body (12) has two opposing end portions (18), wherein each of the end portions (18) has one of two opposing channel end portions (20) of the channel (16),
- wherein the display devices (11) are receivable in the channel (16),
- wherein the system (10) has at least two current conductors (21, 22),
- wherein each of the current conductors (21, 22) has two current-conductor end portions (24, 26) and an intermediate portion (29),
- wherein the intermediate portion (29) of each current conductor (21, 22) is arranged in the channel (16) and each of the current-conductor end portions (24, 26) of each current conductor (21, 22) is arranged with at least a partial portion (27) in one of the two opposing channel end portions (20),
- wherein by receiving the display devices (11) in the channel (16), a power supply contact (28) of each display device (11) is contactable in an electrically conductive manner with one of the current conductors (21, 22) in each case,
- wherein the closure device (14) has at least two electrical supply lines (32, 34), which are provided for making a connection with a power source (36),
- wherein the closure device (14) is releasably connectable to at least one of the two opposing end portions (18) of the base body (12),
- wherein by connecting the closure device (14) to the end portion (18) of the base body (12) a supply-line end portion (38) of each of the supply lines (32, 34) is in each case contactable in an electrically conductive manner with one current-conductor end portion (24, 26) of the current-conductor end portions (24, 26) which are arranged with at least a partial portion (27) in the channel end portion (20) of the end portion (18) of the base body (12),
- wherein the closure device (14) has a flat body (40) made of a plastics material with two opposing sides (42, 44) and has at least one insertable body (46) made of a plastics material which is connected to one of the two sides (42, 44),
- wherein the insertable body (46) for connecting the closure device (14) to the end portion (18) of the base body (12) is receivable in the channel (16) in a force-fitting manner by inserting it into the channel (16) on the end face,
- wherein the supply-line end portions (38) that are contactable with the current-conductor end portions (24, 26) are provided on the insertable body (46),
- wherein the end face (48) of the base body (12) can be covered by the flat body (40) by inserting the insertable body (46) into the channel (16) on the end face,
- wherein the flat body (40) has a configuration which, by inserting the insertable body (46) into the channel (16) on the end face, can be attached to the base body (12) in a flush manner.

3. System (10) according to claim 2, **characterised in that** the system (10) has at least one data line (50), wherein the data line (50) has an intermediate portion (52) and two data-line end portions (54),
- wherein the intermediate portion (52) of the data line (50) is arranged in the channel (16) and each of the data-line end portions (54) is arranged with at least a partial portion in one of the two opposing channel end portions (20),
- wherein by receiving the display devices (11) in the channel (16) a data-line connector (58) of each display device (11) can be connected to the data line (50) in a data-transmitting manner in each case,
- wherein the closure device (14) has at least one data supply line (60), which is provided for making a data-transmitting connection to a data source (62),
- wherein by connecting the closure device (14) to the end portion (18) of the base body (12) an end portion (64) of the data supply line (60) can be connected in a data-transmitting manner to the data-line end portion (54), which is arranged with at least a partial portion in the channel end portion (20) of the end portion (18) of the base body (12).

4. System (10) according to claim 2 and 3, **characterised in that** the supply-line end portions (38) that can be contacted with the current-conductor end portions (24, 26), and the end portion (64) of the data supply line (60) that can be connected to one of the data-line end portions (54) are provided on the insertable body (46).

## Revendications

1. Procédé d'alimentation en courant de plusieurs dispositifs d'affichage électroniques (11) pour afficher des informations concernant des marchandises avec un système (10), qui est prévu pour l'alimentation électrique de plusieurs dispositifs d'affichage électroniques (11) pour afficher des informations concernant des marchandises,
- dans lequel le système (10) présente un corps de base allongé (12) composé d'un matériau en matière plastique et au moins un dispositif de terminaison (14),
- dans lequel le corps de base (12) présente un canal (16) s'étendant sur la totalité de la longueur du corps de base (12) pour loger des dispositifs d'affichage (11),
- dans lequel le corps de base (12) présente deux sections d'extrémité (18) opposées, dans lequel chacune des sections d'extrémité (18) présente une parmi deux sections d'extrémité de canal (20) opposées du canal (16),
- dans lequel les dispositifs d'affichage (11) peuvent être logés dans le canal (16),
- dans lequel le système (10) présente au moins deux conducteurs de courant (21, 22),
- dans lequel chacun des conducteurs de courant (21, 21) présente deux sections d'extrémité de conducteur de courant (24, 26) et une section intermédiaire (29),
- dans lequel la section intermédiaire (29) de chaque conducteur de courant (21, 22) est disposée dans le canal (16) et respectivement une des sections d'extrémité de conducteur de courant (24, 26) de chaque conducteur de courant (21, 22) est disposée dans respectivement une des deux sections d'extrémité de canal (20) opposées avec au moins une section partielle (27),
- dans lequel respectivement un contact d'alimentation en courant (28) de chaque dispositif d'affichage (11) peut être mis en contact électriquement conducteur avec respectivement un des conducteurs de courant (21, 22) en logeant les dispositifs d'affichage (11) dans le canal (16),
- dans lequel le dispositif de terminaison (14) présente au moins deux lignes d'alimentation électriques (32, 34), qui sont prévues pour établir une liaison avec une source de courant (36),
- dans lequel le dispositif de terminaison (14) peut être relié de manière amovible à au moins une des deux sections d'extrémité (18) opposées du corps de base (12),
- dans lequel respectivement une section d'extrémité de ligne d'alimentation (38) de chacune des lignes d'alimentation (32, 34) peut être mise en contact électriquement conducteur avec respectivement une section d'extrémité de conducteur de courant (24, 26) des sections d'extrémité de conducteur de courant (24, 26) en reliant le dispositif de terminaison (14) à la section d'extrémité (18) du corps de base (12), lesquelles sont disposées dans la section d'extrémité de canal (20) de la section d'extrémité (18) du corps de base (12) avec au moins une section partielle (27),
- dans lequel le dispositif de terminaison (14) présente un corps plat (40) composé d'un matériau en matière plastique avec deux côtés (42, 44) opposés et au moins un corps enfichable (46) relié à l'un des deux côtés (42, 44), composé d'un matériau en matière plastique,
- dans lequel le corps enfichable (46) peut être logé à force dans le canal (16) par enfichage côté frontal dans le canal (16) pour relier le dispositif de terminaison (14) à la section d'extrémité (18) du corps de base (12),
- dans lequel les sections d'extrémité de ligne d'alimentation (38) pouvant être mises en contact avec les sections d'extrémité de conducteur de courant (24, 26) sont prévues sur le corps enfichable (46),
- dans lequel le côté frontal (48) du corps de base (12) peut être recouvert par le corps plat (40) par enfichage côté frontal du corps enfichable (46) dans le canal (16),
- dans lequel le corps plat (40) présente une réalisation qui peut être raccordée en affleurement au corps de base (12) par enfichage côté frontal du corps enfichable (46) dans le canal (16),
dans lequel le procédé comprend les étapes suivantes :
(A) la fourniture du système (10),
(B) le logement des dispositifs d'affichage (11) dans le canal (16) du corps de base allongé (12),
(C) la liaison du dispositif de terminaison (14) à une section d'extrémité (18) du corps de base (12),
(D) le raccordement des lignes d'alimentation (32, 34) du dispositif de terminaison (14) à une source de courant (36), et
(E) l'alimentation en courant des dispositifs d'affichage (11) par la source de courant (36).

2. Système (10) qui est prévu pour alimenter en courant plusieurs dispositifs d'affichage électroniques (11) pour afficher des informations concernant des marchandises,
- dans lequel le système (10) présente un corps de base allongé (12) composé d'un matériau en matière plastique et au moins un dispositif de terminaison (14),
- dans lequel le corps de base (12) présente un canal (16) s'étendant sur la totalité de la longueur du corps de base (12) pour loger les dispositifs d'affichage (11),
- dans lequel le corps de base (12) présente deux sections d'extrémité (18) opposées, dans lequel chacune des sections d'extrémité (18) présente une de deux sections d'extrémité de canal (20) opposées du canal (16),
- dans lequel les dispositifs d'affichage (11) peuvent être logés dans le canal (16),
- dans lequel le système (10) présente au moins deux conducteurs de courant (21, 22),
- dans lequel chacun des conducteurs de courant (21, 22) présente deux sections d'extrémité de conducteur de courant (24, 26) et une section intermédiaire (29),
- dans lequel la section intermédiaire (29) de chaque conducteur de courant (21, 22) est disposée dans le canal (16) et respectivement une des sections d'extrémité de conducteur de courant (24, 26) de chaque conducteur de courant (21, 22) est disposée dans respectivement une des deux sections d'extrémité de canal (20) opposée avec au moins une section partielle (27),
- dans lequel respectivement un contact d'alimentation en courant (28) de chaque dispositif d'affichage (11) peut être mis en contact électriquement conducteur avec respectivement un des conducteurs de courant (21, 22) en logeant les dispositifs d'affichage (11) dans le canal (16),
- dans lequel le dispositif de terminaison (14) présente au moins deux lignes d'alimentation (32, 34) électriques, qui sont prévues pour établir une liaison avec une source de courant (36),
- dans lequel le dispositif de terminaison (14) peut être relié de manière amovible à au moins une des deux sections d'extrémité (18) opposées du corps de base (12),
- dans lequel respectivement une section d'extrémité de ligne d'alimentation (38) de chacune des lignes d'alimentation (32, 34) peut être mise en contact électriquement conducteur avec respectivement une section d'extrémité de conducteur de courant (24, 26) des sections d'extrémité de conducteur de courant (24, 26) en reliant le dispositif de terminaison (14) à la section d'extrémité (18) du corps de base (12), qui sont disposées dans la section d'extrémité de canal (20) de la section d'extrémité (18) du corps de base (12) avec au moins une section partielle (27),
- dans lequel le dispositif de terminaison (14) présente un corps plat (40) composé d'un matériau en matière plastique avec deux côtés (42, 44) opposés et au moins un corps enfichable (46) relié à l'un des deux côtés (42, 44), composé d'un matériau en matière plastique,
- dans lequel le corps enfichable (46) peut être logé à force dans le canal (16) par enfichage côté frontal dans le canal (16) pour relier le dispositif de terminaison (14) à la section d'extrémité (18) du corps de base (12),
- dans lequel les sections d'extrémité de ligne d'alimentation (38) pouvant être mises en contact avec les sections d'extrémité de conducteur de courant (24, 26) sont prévues sur le corps enfichable (46),
- dans lequel le côté frontal (48) du corps de base (12) peut être recouvert par le corps plat (40) par enfichage côté frontal du corps enfichable (46) dans le canal (16),
- dans lequel le corps plat (40) présente une réalisation, qui peut être raccordée en affleurement au corps de base (12) par enfichage côté frontal du corps enfichable (46) dans le canal (16).

3. Système (10) selon la revendication 2, **caractérisé en ce que** le système (10) présente au moins une ligne de données (50), dans lequel la ligne de données (50) présente une section intermédiaire (52) et deux sections d'extrémité de ligne de données (54),
- dans lequel la section intermédiaire (52) de la ligne de données (50) est disposée dans le canal (16) et respectivement une des sections d'extrémité de ligne de données (54) est disposée dans respectivement une des deux sections d'extrémité de canal (20) opposées avec au moins une section partielle,
- dans lequel respectivement un raccord de ligne de données (58) de chaque dispositif d'affichage (11) peut être relié de manière à pouvoir transmettre des données à la ligne de données (50) en logeant les dispositifs d'affichage (11) dans le canal (16),
- dans lequel le dispositif de terminaison (14) présente au moins une ligne d'alimentation en données (60), qui est prévue pour établir une liaison de transmission de données avec une source de données (62),
- dans lequel une section d'extrémité (64) de la ligne d'alimentation en données (60) peut être reliée de manière à pouvoir transmettre des données à la section d'extrémité de ligne de données (54) en reliant le dispositif de terminaison (14) à la section d'extrémité (18) du corps de base (12), qui est disposée dans la section d'extrémité de canal (20) de la section d'extrémité (18) du corps de base (12) avec au moins une section partielle.

4. Système (10) selon la revendication 2 et 3, **caractérisé en ce que** les sections d'extrémité de ligne d'alimentation (38) pouvant être mises en contact avec les sections d'extrémité de conducteur de courant (24, 26) et la section d'extrémité (64), pouvant être reliée à une des sections d'extrémité de ligne de données (54), de la ligne d'alimentation en données (60) sont prévues sur le corps enfichable (46).
